# EUROPEAN PATENT SPECIFICATION

(11) **EP 1 231 255 B1**
(45) Date of publication and mention of the grant of the patent: **21.09.2005**
(21) Application number: 00971817.2
(22) Date of filing: 07.11.2000
(51) Int. Cl.: C10M 111/02, C09K 5/04, F25B 1/00, C10M 101/02, C10M 105/38, C10N 40/30, C10M 171/00

(54) **LUBRICATING OIL COMPOSITION FOR REFRIGERATOR, WORKING FLUID AND REFRIGERATOR**
SCHMIERÖLZUSAMMENSETZUNG FÜR KÜHLEINRICHTUNG, BETRIEBSFLÜSSIGKEIT UND KÜHLEINRICHTUNG
COMPOSITION D'HUILE DE LUBRIFICATION POUR REFRIGERATEUR, LIQUIDE DE TRAVAIL ET REFRIGERATEUR

(30) Priority: 18.11.1999 JP 32771199
(43) Date of publication of application: 14.08.2002
(73) Proprietor: JAPAN ENERGY CORPORATION, Tokyo 105-0001 (JP)
(72) Inventor: KAIMAI, Takashi, Japan Energy Corporation, Toda-shi, Saitama 335-0026 (JP); TAKAHASHI, Hitoshi, Japan Energy Corporation, Toda-shi, Saitama 335-0026 (JP)
(74) Representative: Forstmeyer, Dietmar
(86) International application number: PCT/JP2000/007805
(87) International publication number: WO 2001/036571

(56) References cited:
- JP-A- 1 161 089
- JP-A- 8 311 471
- JP-A- 9 143 486
- JP-A- 9 208 980
- US-A- 5 798 319
- PATENT ABSTRACTS OF JAPAN vol. 1997, no. 10, 31 October 1997 (1997-10-31) & JP 9 143486 A (MATSUSHITA ELECTRIC IND CO LTD), 3 June 1997 (1997-06-03)
- PATENT ABSTRACTS OF JAPAN vol. 1997, no. 12, 25 December 1997 (1997-12-25) & JP 9 208980 A (NIPPON OIL CO LTD), 12 August 1997 (1997-08-12)

## Description

### Technical Field

The present invention relates to a refrigeration oil for a refrigerating machine using Flon as a refrigerant. In particular, the present invention relates to a lubricating oil composition for a refrigerating machine using hydrofluorocarbon (HFC) containing no chlorine as a refrigerant, also relates to a working fluid and a refrigerating machine.

### Background Art

Conventionally, as a lubricating oil for a refrigerating machine such as a freezer, an air conditioner, and a refrigerator, a number of oils such as a mineral oil and an alkylbenzene oil are known. However, a mineral oil, an alkylbenzene oil, and the like have unsatisfactory miscibility with a hydrofluorocarbon (HFC) refrigerant containing no chlorine such as R-134a. Therefore, the oil-returning property to a compressor is deteriorated, and lack of lubricity and seizing are caused by supplying only a separated refrigerant when a compressor is started at a high ambient temperature. Furthermore, depending upon the property of a mineral oil component, a wax component is precipitated at a low temperature, which may have an adverse effect.

As a lubricant for a refrigerating machine using hydrofluorocarbon containing no chlorine as a refrigerant, a polyalkylene glycol (PAG) type refrigeration oil or a polyol ester type refrigeration oil are known.

The PAG type refrigeration oil is excellent in miscibility with an HFC refrigerant. However, for use in a system with a built-in motor, such as a home refrigerator, the PAG type refrigeration oil has a remarkably lower electrical insulating property as compared with the conventional mineral type refrigeration oil, and also has a high hygroscopicity.

On the other hand, the polyol ester type refrigeration oil is excellent in miscibility with an HFC refrigerant in a wide temperature range, and has an electrical insulating property higher than that of the PAG type refrigeration oil. Therefore, the polyol ester type refrigeration oil become being used widely as refrigeration oil for an HFC refrigerant in a system with a motor built therein.

In the case of the polyol ester type refrigeration oil, although an electrical insulating property thereof is higher than that of the PAG type refrigeration oil, a volume resistivity is of the order of 10¹³ Ω cm at maximum. Therefore, when there is a demand for still higher electrical insulating property, the polyol ester type refrigeration oil may not be necessarily sufficient. There are also expressed the following concerns regarding the polyol ester type refrigeration oil: the polyol ester type refrigeration oil has a higher hygroscopicity as compared with the mineral oil, so that the polyol ester type refrigeration oil is likely to hydrolyze; a lubricity may be degraded due to a low viscosity; and adhering substances are likely to be generated in a capillary of a refrigerating machine due to metal working lubricant for manufacturing the refrigerating machine.

### Summary of the Invention

An object of the present invention is to provide a lubricating oil composition for a refrigerating machine as a lubricating oil for a refrigerating machine using a hydrofluorocarbon refrigerant containing no chlorine, which has excellent miscibility with a refrigerant, lubricity and electrical insulating property, and further has low hygroscopicity and hydrolyzability, and still further is excellent in the property of dissolving impurities and the property of oil-returning to a compressor in a refrigerating machine.

Another object of the present invention is to provide a working fluid for a refrigerating machine, comprising the above-mentioned lubricating oil composition for a refrigerating machine and a hydrofluorocarbon refrigerant consisting of carbon, hydrogen, and fluorine.

Still another object of the present invention is to provide a refrigerant compression type refrigerating machine comprising at least a compressor, a condenser, an expanding mechanism, and an evaporator, in which the above-mentioned working fluid for a refrigerating machine is used.

The inventors of the present invention has earnestly studied, and as a result, we have found that the above-mentioned problem can be solved by using a lubricating oil composition containing a mixture of a neopentylpolyol ester compound and a mineral oil component having a particular property. Based on this finding, the present invention has been achieved.

Namely, the present invention relates to:
1. A lubricating oil composition for a refrigerating machine using a hydrofluorocarbon refrigerant, characterized by comprising a mixture of 1) an ester compound and 2) a mineral oil component described below, and further comprising as a main component a composition having a weight ratio of the mineral oil component/ester compound of 9/1 to 2/8,
   1) a polyol ester or a complex ester compound comprising a neopentylpolyol, and a monocarboxylic acid and/or a dicarboxylic acid,
   2) a mineral oil component having a %Cp of 70% or less as measured by the n-d-M ring analysis, a temperature corresponding to 50% distillation of 400°C or lower as measured by the test method for boiling range distribution of petroleum fractions by gas chromatography and a pour point of -30°C or lower;
2. The lubricating oil composition for a refrigerating machine described in the above item 1, in which the pour point of the mixture of the ester compound and the mineral oil component is -35°C or lower;
3. The lubricating oil composition for a refrigerating machine described in the above item 1 or 2, in which the mineral oil component has a normal paraffin content of 2% or less;
4. A working fluid for a refrigerating machine characterized by comprising the lubricating oil composition for a refrigerating machine described in any one of the above-mentioned items 1 to 3, and a hydrofluorocarbon refrigerant consisting of carbon, hydrogen, and fluorine; and
5. A refrigerant compression type refrigerating machine characterized by comprising at least a compressor, a condenser, an expanding mechanism, and an evaporator, and using the working fluid for a refrigerating machine of the above-mentioned item 4.

The lubricating oil composition for a refrigerating machine of the present invention contains a mineral oil component that is not excellent in miscibility with an HFC refrigerant. However, when the mineral oil component is mixed with an ester compound excellent in miscibility with an HFC refrigerant, the mineral oil component is allowed to be dispersed in the refrigerant. Furthermore, by using a mineral oil component with a low pour point, the composition becomes likely to flow in an evaporator. Therefore, oil-returning to a compressor in a refrigerating machine is enhanced.

Further, since the mineral oil component that is not excellent in miscibility is not diluted in a refrigerant, thus the viscosity is not decreased. Therefore, the above-mentioned composition is suitable for lubricating a refrigerant compressor.

In addition, an impurity component that is considered to be caused by metal working lubricant remaining in a refrigerating machine is dissolved in the mineral oil, so that it is possible to avoid clogging the capillary.

Furthermore, since the mineral oil component with a high electrical insulating property is used, it is possible to increase an electrical insulating property of mixed oil.

### Detailed Description the Invention

Hereinafter, embodiments of the present invention will be described in detail.

The present invention is applicable to a refrigerating machine using a hydrofluorocarbon refrigerant. More specifically, examples of the refrigerant include a hydrofluorocarbon refrigerant made of carbon, hydrogen, and fluorine, such as 1,1,1,2-tetrafluoroethane (R-134a), 1,1,2,2-tetrafluoroethane (R-134), difluoromethane (R-32), pentafluoroethane (R-125), 1,1-difluoroethane (R-152a), or a mixed refrigerant thereof (e.g., R407C (R32:R125:R134a = 23:25:52), etc.).

A base oil in the lubricating oil composition for a refrigerating machine of the present invention comprises a mixture of the following 1) ester compound and 2) mineral oil component.
1) A polyol ester or complex ester compound prepared from a neopentylpolyol and a monocarboxylic acid and/or a dicarboxylic acid.
2) A mineral oil component having a %Cp of 70% or less as measured by the n-d-M ring analysis, a temperature corresponding to 50% distillation of 400°C or lower as measured by the test method for boiling range distribution of petroleum fractions by gas chromatography and a pour point of -30°C or lower.

### 1) Ester compound

According to the present invention, a neopentylpolyol containing 5 to 10 carbon atoms is used. Examples thereof include neopentylglycol, trimethylolethane, trimethylolpropane, trimethylolbutane, pentaerythritol, dipentaerythritol, and the like.

As a carboxylic acid, a monocarboxylic acid or dicarboxylic acid having 3 to 18 carbon atoms can be used. An alkyl group bonded to a carboxyl group may be a straight-chain or branched-chain.

Examples of the monocarboxylic acid include propionic acid, isopropionic acid, butanoic acid, isobutanoic acid, pentanoic acid, isopentanoic acid, hexanoic acid, heptanoic acid, isoheptanoic acid, octanoicacid, 2-ethylhexanoic acid, nonanoic acid, 3,5,5-trimethylhexanoic acid, decanoic acid, undecanoic acid, lauric acid, myristic acid, palmitic acid, palmitoleic acid, stearic acid, isostearic acid, oleic acid, linoleic acid, linolenic acid, and the like.

Examples of the dicarboxylic acid include succinic acid, glutaric acid, adipic acid, pimelic acid, suberic acid, azelaic acid, sebacic acid, phthalic acid, maleic acid, and the like.

The ester compound of the present invention can be prepared as a polyol ester compound or a complex ester compound by appropriately mixing the above-mentioned neopentylpolyol with at least one kind of monocarboxylic acid and/or dicarboxylic acid to occur esterification reaction.

In view of resistibility to hydrolysis, it is desired that the ester compound of the present invention has a total acid value of 0.1 mgKOH/g or less, preferably 0.05 mgKOH/g or less, and a hydroxyl value of 10 mgKOH/g or less, preferably 5 mgKOH/g or less. An ester compound with a high total acid value or a high hydroxyl value is likely to be hydrolyzed due to its high hygroscopicity, and adversely affects an organic material. Therefore, when a neopentylpolyol is reacted with a carboxylic acid, it is preferable that a reaction time sufficient for reducing a remaining amount of unreacted hydroxyl groups of the polyol is taken, and after reaction, the ester is purified while removing unreacted carboxylic acid.

### 2) Mineral oil component

The mineral oil component of the present invention has a %Cp of 70% or less as measured by the n-d-M ring analysis and a temperature corresponding to 50% distillation of 400°C or lower as measured by the test method for boiling range distribution of petroleum fractions by gas chromatography and a pour point of -30°C or lower.

The mineral oil component of the present invention can be obtained, for example, by subjecting a distillate, which is obtained through atmospheric distillation or vacuum distillation of crude oil, to an appropriate combination of refining processes such as solvent deasphalting, solvent extraction, hydrocracking , solvent dewaxing, catalytic dewaxing, hydro-refining , clay treatment, and the like.

For example, a distillate from vacuum distillation is dewaxed by catalytic dewaxing, followed by hydro-refining, whereby a mineral oil component can be obtained. In view of stability, the mineral oil component thus obtained is preferably subjected to clay treating. In order to further reduce a trace amount of wax component, it is preferable to separate light and middle distillate obtained from heavy distillate by distillation and use them. Furthermore, regarding dewaxing, catalytic dewaxing that allows oil with a still lower pour point to be obtained is preferable.

The mineral oil component of the present invention has a %Cp of 70% or less, preferably 60% or less, more preferably 50% or less as measured by the n-d-M ring analysis. When %Cp exceeds 70%, a normal paraffin component is increased and becomes likely to be precipitated as a wax in the presence of a refrigerant, which is not preferable.

Herein, the n-d-M ring analysis refers to a method of calculating a carbon distribution and a ring content by using an empirical formula of the n-d-M method defined by ASTM D3238, after measuring a refractive index, a density, a kinematic viscosity, and a sulfur content of oil.

Furthermore, the mineral oil component of the present invention has a 50% distillation temperature of 400°C or lower, preferably 350°C or lower, more preferably 300°C or lower as measured by the test method for boiling range distribution of petroleum fractions by gas chromatography. When a temperature corresponding to 50% distillation exceeds 400°C, the ratio of a heavy distillate is increased, and the amount of normal paraffin with a large molecular weight is increased, which unpreferably becomes likely to be precipitated as a wax.

The test method for boiling range distribution of petroleum fractions by gas chromatography refers to a method of obtaining a calibration curve of normal paraffin from a retention time of gas chromatography and a boiling point of a compound, and obtaining the distillation property of a sample. This method is defined in ASTM D2887. Herein, a total area method is used.

Furthermore, the mineral oil component of the present invention has a pour point of -30°C or lower, preferably -40°C or lower, more preferably -50°C or lower. When the pour point is higher than -30°C, a wax component is contained in a large amount, and becomes likely to be precipitated as a solid, which is not preferable.

It is preferable that the mineral oil component of the present invention satisfies the following properties as well as the above-mentioned properties.

Cloud point (JIS K2269) : -30°C or lower, preferably -40° or lower, more preferably -50° or lower. As cloud point corresponds to a wax content in oil, it is preferable that a cloud point is lower, that is, a wax component is in a small amount.

Sulfur content (JIS K2541) : 1000 ppm or less, preferably 500 ppm or less, more preferably 100 ppm or less. A large amount of a sulfur content adversely affects stability under the co-existence of refrigerant and oil. Therefore, a sulfur content is preferably less.

Normal paraffin content: 2% or less, preferably 1% or less, more preferably 0.5% or less. When a normal paraffin content exceeds 2%, normal paraffin becomes likely to be solidified as a wax and precipitated, which is not preferable. The normal paraffin content is obtainable from a retention time and an area value by gas chromatography using normal paraffin as a standard compound.

The lubricating oil composition for a refrigerating machine of the present invention contains, as a main component, a composition in which a weight ratio of the above-mentioned ester compound/the above-mentioned mineral oil component is 9/1 to 2/8, preferably 9/1 to 3/7, more preferably 7/3 to 3/7.

When the weight ratio of the mineral oil component/the ester compound is too high, the amount of a mineral oil component that is not miscible with a refrigerant is increased too much, and the property of oil-returning to a compressor is decreased. On the other hand, when the weight ratio is too small, the characteristics of mixed oil become substantially the same as those of only ester, so that features of mixed oil unpreferably cannot be exhibited.

The mixture of the ester compound and the mineral oil component has a pour point of -35°C or lower, preferably -40°C or lower.

The lubricating oil composition for a refrigerating machine of the present invention contains, as a main component, a mixture of the ester compound and mineral oil component explained above. However, as long as the function of a ref rigeration oil is not lost, other lubrication oil components, such as PAG and a mineral oil component other than those defined in the present invention can be appropriately mixed with the compound.

Furthermore, the following additives may be mixed with the lubricating oil composition for a refrigerating machine of the present invention.

Anti-wear agent: sulfur type, phosphorus type, zinc thiophosphate type, etc.

Antioxidant: phenol type, amine type, phosphorus type, etc.

Metal passivator: benzotriazole, thiadiazole, dithiocarbamate, etc.

Acid capturing agent: epoxy compound, carbodiimide compound, etc.

Oiliness agent: higher fatty acids, alcohols, etc.

Others: known additives for lubricating oil

The lubricating oil composition for a refrigerating machine of the present invention and hydrofluorocarbon refrigerant can be used as a working fluid by mixing in a weight ratio of lubricating oil:refrigerant of 5:95 to 80:20. In the case where the weight ratio is out of this range and the amount of oil is too small, unpreferably there is a risk of lack of lubricity. In the case where the amount of oil is too large, efficiency is unpreferably decreased.

The working fluid for a refrigerating machine of the present invention can be used as a working fluid for a refrigerant compression type refrigerating machine comprising at least a compressor, a condenser, an expanding mechanism, and an evaporator. For example, the working fluid is applicable to a freezer, an air conditioner, a refrigerator, and the like.

### Example

Hereinafter, the present invention will be described based on the examples. However, the present invention is not limited to the examples.

### (Mineral oil component)

Following four kinds of mineral oil components were prepared by the procedure described below.
A1: Light distillate oil obtained by subjecting distillate oil of vacuum distillation to catalytic dewaxing, hydro-refining, and further distillation.
A2: Oil obtained by subjecting distillate oil of vacuum distillation to hydro-refining and catalytic dewaxing.
B1: Oil obtained by subjecting distillate oil of vacuum distillation to hydro-refining and solvent dewaxing.
B2 : Oil obtained by subjecting distillate oil of vacuum distillation to solvent extraction to obtain raffinate, and subjecting the raffinate to hydro-refining, followed by solvent dewaxing.

Table 1 shows the properties of eachmineral oil component. Among them, A-1 andA-2 are in the scope of the present invention. However, B-2 and B-2 are out of the scope of the present invention.

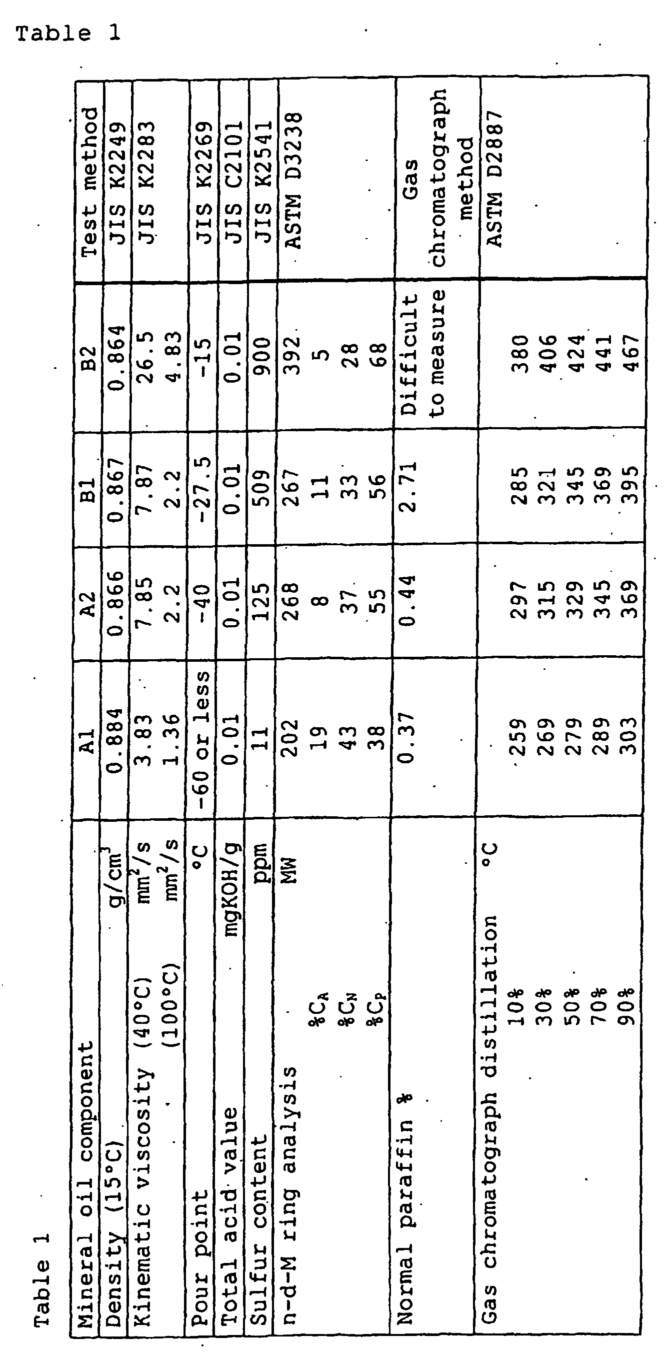

### (Ester compound)

The following three kinds of polyol ester compounds were prepared.
C1: ester of neopentylglycol and 2-ethylhexanoic acid
C2: ester of pentaerythritol and 2-ethylhexanoic acid
C3: ester of pentaerythritol and 2-ethylhexanoic acid/3,5,5-trimethylhexanoic acid (50 wt%/50 wt%)

Table 2 shows the properties of each ester compound.

**Table 2**

| Ester | C1 | C2 | C3 |
|---|---|---|---|
| Neopentylpolyol | Neopentylglycol | Pentaerythritol | Pentaerythritol |
| Carboxylic acid | 2-ethylhexanoic acid | 2-ethylhexanoic acid | 2-ethylhexanoic acid, & 3,5,5-trimethyl hexanoic acid |
| Density (15°C) g/cm³ | 0.919 | 0.966 | 0.961 |
| Kinematic viscosity | | | |
| (40°C) mm²/s | 7.41 | 45.1 | 65.1 |
| (100°C) mm²/s | 2.04 | 6.31 | 8.30 |
| Pour point °C | -60°C or less | -25.0 | -40.0 |
| Total acid value mgKOH/g | 0.01 | 0.01 | 0.01 |
| Two-layer separation temperature °C | -60°C or less | -17 | -21 |
| The two-layer separation temperature was measured in accordance with a miscibility test method of JIS K2211. Oil/R134a = 2/8 | | | |

### (Mixed oil)

The above-mentioned mineral oil components and the ester compounds were mixed in the following ratios to obtain mixed oils of Examples 1 to 3 and Comparative examples 1 to 3. For a further comparison, base oils of a single mineral oil component (Comparative Examples 4, 5) and base oil of a single ester (Comparative Example 6) were also prepared.
Example 1: A1(50%) + C1(10%) + C2 (40%)
Example 2: A1(40%) + C3(60%)
Example 3: A2(40%) + C3(60%)
Comparative Example 1: B1(50%) + C1(10%) + C2(40%)
Comparative Example 2: B1(40%) + C3(60%)
Comparative Example 3: B2(40%) + C3(60%)
Comparative Example 4: A2(100%)
Comparative Example 5: B2(100%)
Comparative Example 6: C1(100%)

Regarding these samples, the properties (density, viscosity, pour point, total acid value) of each lubricating oil composition, floc point test results, volume resistivity, hygroscopic moisture content, hydrolysis test results are shown in Table 3.

Each test method is as follows.

Floe point test: (measured in accordance with a floc point test method in JIS K2211 appendix 1)
1. Refrigerant: R407C, lubricating oil/refrigerant = 1/9, observed at a temperature of -10°C
2. Refrigerant: R134a, lubricating oil/refrigerant = 1/9, observed at a temperature of -20°C

The floc point test refers to a method of measuring a generation temperature of a hair-shaped precipitate at a time when a mixed solution of oil and a refrigerant is cooled, and evaluating a wax precipitation tendency.

Volume resistivity: (measured in accordance with a volume resistivity test of JIS C2101), measured at 25°C

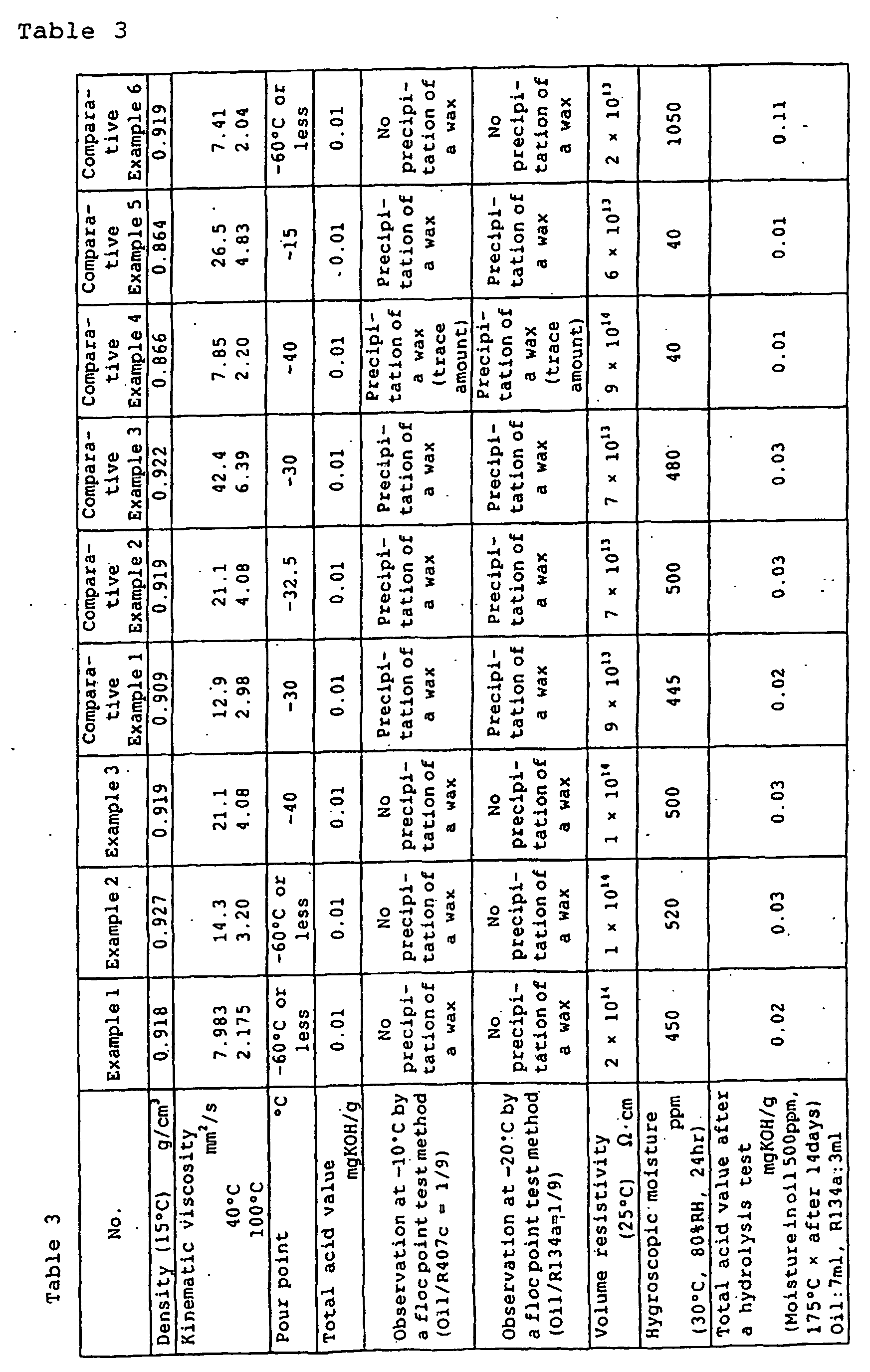

Hygroscopic moisture amount: (measured by Karl Fischer titration method in accordance with a moisture test method of JIS K2275)

A sample was held at a temperature of 30°C and a relative humidity of 80% for 24 hours, and thereafter, the moisture amount was measured as a hygroscopic moisture amount.

Hydrolysis test: (measured in accordance with a chemical stability test method of JIS K2211)

A mixture of 7 ml of lubricating oil and 3 ml of refrigerant (R134a) was held under the condition of a moisture amount in oil of 500 ppm and a temperature of 175°C for 14 days, and thereafter, the total acid value of oil was measured.

### (Results)

As a result of the floc point test, precipitation of a wax was not found in any of Examples 1 to 3. In contrast, precipitation of a wax was observed in Comparative Examples 1 to 5.

In Examples 1 to 3, a volume resistivity was of the order of 10¹⁴ Ω•cm at 25°C. In Comparative Examples 1 to 3 and Comparative Example 6, a volume resistivity was only of the order of 10¹³ Ω•cm.

Furthermore, in Comparative Example 6 of a sample of a single ester, a hygroscopic moisture content was large, and hydrolysis stability was also not satisfactory as compared with the other samples.

### (Compressor test)

Using the lubricating oil compositions in Examples 1, 2 and Comparative Examples 1, 5, 6, an durability test was carried out by a compressor for a refrigerator. An ON/OFF test that is hard test relating to oil-returning was adapted as operation mode.

### Test condition:

Compressor: 1 HP, 220 V, 50 Hz
Lubricating oil composition: 250 g
Refrigerant: R134a, 50g
Discharge pressure: 1.5 MPa
Suction pressure: 0.05 MPa
Discharge temperature: 90°C
Evaporator inlet temperature: -10°C
On/OFF time: 2 minutes/2 minutes
Operation time: 500 hours

### (Results)

After the durability test, the compressor, piping, and capillary were opened to observe. In Examples 1 and 2, any abnormality was found inside, and there was no abrasion in sliding materials. Furthermore, the total acid value of oils after the durability test was 0.01 mgKOH/g. Thus, the example oils were not deteriorated, and showed satisfactory results.

In Comparative Example 1, a considerable amount of oil was adhered to the inside of the piping and capillary, and abnormal vibrations occasionally occurred during operation. Furthermore, the total acid value of oil after the durability test was 0.03 mgKOH/g. Thus, a slight increase was found.

In the case of the mineral oil of Comparative Example 5, it was difficult to set conditions due to severe fluctuations, and as a result, operation was impossible.

In the case of the single ester in Comparative Example 6, operation was conducted without any problem. However, an adhering substance considered to be caused by metal working lubricant was found in the capillary after opening. Furthermore, wear was observed at the sliding portion. The total acid value of the oil was 0.05 mgKOH/g.

The lubricating oil composition for a refrigerating machine of the present invention as a lubricating oil for a refrigerating machine using a hydrofluorocarbon refrigerant containing no chlorine, is excellent in miscibility with a refrigerant, lubricity and an electrical insulating property, is low hygroscopicity and hydrolyzability, and further is excellent in the property of dissolving impurities in a refrigerating machine.

### Industrial Applicability

Therefore, a refrigerating machine using a working fluid containing a mixture of the lubricating oil composition of the present invention and a hydrofluorocarbon refrigerant, exhibits to hardly clog the capillary, and can show excellent property of oil-returning to a compressor.
Thus, such a refrigerating machine can be used preferably as a motor built-in type refrigerating machine requiring high insulation.

## Claims

1. A lubricating oil composition for a refrigerating machine using a hydrofluorocarbon refrigerant, **characterized by** comprising as a main component a composition composed of a mixture of the following 1) an ester compound and 2) a mineral oil component, wherein the weight ratio of the mineral oil component/ester compound is 9/1 to 2/8,
1) a polyol ester or a complex ester compound comprising a neopentylpolyol, and a monocarboxylic acid and/or a dicarboxylic acid,
2) a mineral oil component having a %Cp of 70% or less as measured by the n-d-M ring analysis, temperature corresponding to 50% distillation of 400°C or lower as measured by the test method for boiling range distribution of petroleum fractions by gas chromatography and a pour point of -30°C or lower.

2. A lubricating oil composition for a refrigerating machine according to claim 1, wherein the pour point of the mixture of the ester compound and the mineral oil component is -35°C or lower.

3. A lubricating oil composition for a refrigerating machine according to claim 1 or 2, wherein the normal paraffin content of the mineral oil component is 2% or less.

4. A working fluid for a refrigerating machine comprising the lubricating oil composition for a refrigerating machine defined in any one of claims 1 to 3, and a hydrofluorocarbon refrigerant consisting of carbon, hydrogen, and fluorine.

5. A refrigerant compression type refrigerating machine comprising at least a compressor, a condenser, an expanding mechanism, and an evaporator, and using the working fluid for a refrigerating machine defined in claim 4.

## Patentansprüche

1. Schmieröl-Zusammensetzung für eine Kühlmaschine unter Verwendung eines Fluorkohlenwasserstoff-Kühlmittels, **dadurch gekennzeichnet, dass** es als einen Hauptbestandteil eine Zusammensetzung umfasst, die aus einer Mischung der folgenden Bestandteile zusammengesetzt ist 1) einer Esterverbindung und 2) einem Mineralöl-Bestandteil, wobei das Gewichtsverhältnis des Mineralöl-Bestandteils / Ester-Verbindung 9/1 bis 2/8 beträgt,
1) ein Polyolester oder eine komplexe Esterverbindung, umfassend ein Neopentylpolyol, und eine Monocarbonsäure und/oder eine Dicarbonsäure,
2) ein Mineralölbestandteil mit einem %Cp-Wert von 70 % oder weniger, wie durch die n-d-M-Ringanalyse gemessen, einer Temperatur, die einer Destillation von 50 % entspricht, von 400 °C oder weniger, wie durch das Testverfahren zur Siedebereichs-Verteilung von Petroleum-Fraktionen mittels Gaschromatographie bestimmt, sowie einen Fließpunkt von -30°C oder niedriger.

2. Schmieröl-Zusammensetzung für eine Kühlmaschine nach Anspruch 1, wobei der Fließpunkt der Mischung der Esterverbindung und des Mineralöl-Bestandteils -35 °C oder niedriger ist.

3. Schmieröl-Zusammensetzung für eine Kühlmaschine nach Anspruch 1 oder 2, wobei der Gehalt an Normalparaffin des Mineralöl-Bestandteils 2 % oder weniger beträgt.

4. Arbeitsflüssigkeit für eine Kühlmaschine, umfassend die Schmieröl-Zusammensetzung für eine Kühlmaschine, die in einem der Ansprüche 1 bis 3 definiert wurde, sowie ein Fluorkohlenwasserstoff-Kühlmittel, bestehend aus Kohlenstoff, Wasserstoff, und Fluor.

5. Kühlmaschine vom Kühlmittel-Kompressionstyp, umfassend mindestens einen Kompressor, einen Kondensator, einen Ausdehnungsmechanismus sowie einen Verdampfer, und Verwendung der Arbeitsflüssigkeit für eine Kühlmaschine, die in Anspruch 4 definiert ist.

## Revendications

1. Composition d'huile lubrifiante pour machine frigorifique utilisant un réfrigérant hydrofluorocarboné, **caractérisée en ce qu'**elle comprend comme composant principal une composition composée d'un mélange de ce qui suit : 1) un composé ester et 2) un composant d'huile minérale, dans lequel le rapport en poids du composant d'huile minérale/composé ester est de 9/1 à 2/8,
1) un composé ester polyol ou ester complexe comprenant un néopentylglycol, et un acide mono-carboxylique et/ou un acide dicarboxylique,
2) un composant d'huile minérale ayant un % Cp de 70 % ou moins mesuré par analyse de cycles n-d-M, une température correspondant à 50 % de distillation de 400 °C ou moins mesurée par la méthode d'essai de la répartition de la gamme d'ébullition de fractions pétrolières par chromatographie en phase gazeuse et un point de congélation de -30 °C ou moins.

2. Composition d'huile lubrifiante pour machine frigorifique selon la revendication 1, dans laquelle le point de congélation du mélange du composé ester et du composant d'huile minérale est de -35 °C ou moins.

3. Composition d'huile lubrifiante pour machine frigorifique selon la revendication 1 ou 2, dans laquelle la teneur en paraffine normale du composant d'huile minérale est de 2 % ou moins.

4. Fluide actif pour machine frigorifique comprenant la composition d'huile lubrifiante pour machine frigorifique définie dans l'une quelconque des revendications 1 à 3, et un réfrigérant hydrofluorocarboné constitué de carbone, d'hydrogène et de fluor.

5. Machine frigorifique de type à compression de réfrigérant comprenant au moins un compresseur, un condenseur, un mécanisme d'expansion, et un évaporateur, et utilisant le fluide actif pour machine frigorifique défini à la revendication 4.
